# EUROPÄISCHE PATENTSCHRIFT

(11) **EP 2 009 583 B1**
(45) Veröffentlichungstag und Bekanntmachung des Hinweises auf die Patenterteilung: **31.07.2013**
(21) Anmeldenummer: 08010245.2
(22) Anmeldetag: 05.06.2008
(51) Int. Cl.: G06K 19/077, H01Q 1/38, H01Q 9/04, H01Q 1/22

(54) **Kartendatenträger mit Detektierplättchen**
Card data carrier with detection pad
Support de données sur carte doté de petites plaques de détection

(30) Priorität: 21.06.2007 DE 102007029083
(43) Veröffentlichungstag der Anmeldung: 31.12.2008
(73) Patentinhaber: ASTRA Gesellschaft für Asset Management mbH & Co. KG, 30890 Barsinghausen (DE)
(72) Erfinder: Stobbe, Anatoli, 30890 Barsinghausen (DE); Knop, Werner Dr., 30974 Wennigsen (DE)
(74) Vertreter: Patentanwälte Thömen & Körner

(56) Entgegenhaltungen:
- DE-A1- 10 112 899
- DE-A1- 19 916 180
- DE-U1- 20 110 585
- JP-A- 2005 190 043
- US-A1- 2003 141 590
- US-A1- 2005 025 553
- US-A1- 2007 095 926
- US-B1- 6 975 834

## Beschreibung

Die Erfindung betrifft einen Kartendatenträger mit einem Detektierplättchen nach dem Oberbegriff des Anspruchs 1.

Kartendatenträger sind als Ausweis-, Berechtigungs- und Zugangsdatenträger bekannt und umfassen einen oder mehrere Datenspeicher auf einer Kunststoffkarte im Checkkartenformat. Das Checkkartenformat als einheitliche Größe hat sich inzwischen weltweit durchgesetzt, da es manuell gut handhabbar ist, eine visuell sichtbare Wiedergabe wichtiger Informationen erlaubt, einheitlich in sichtbaren Aufbewahrungstaschen am Körper getragen werden kann, wie auch in üblichen Aufbewahrungsfächern in Brieftaschen und Portemonnaies verstaut werden kann.

Während Datenspeicher bisher als Magnetstreifen und/oder kontaktierte Speicherchips ausgeführt wurden, gibt es inzwischen auch fernlesbare, funkgestützte Detektierplättchen, die ihre Informationen über ein elektromagnetisches Feld übertragen können. Solche Detektierplättchen bestehen aus ein Chip und wenigstens einer Antenne.

Funkgestützte Detektierplättchen sind im LF-Bereich, HF-Bereich und UHF-Bereich zugelassen. Wegen des Checkkartenformats lassen sich Antennen für diese Detektierplättchen im LF-Bereich nur als magnetische Antennen und im HF-Bereich wahlweise als magnetische Antennen oder stark verkürzte elektrische Antennen realisieren. Im UHF-Bereich besteht die Möglichkeit, Antennen als magnetische Antennen und/oder nur gering verkürzte elektrische Antennen zu realisieren.

Detektierplättchen im UHF-Bereich bieten gegenüber Detektierplättchen in den anderen Frequenzbereichen den Vorteil einer sehr schnellen Datenübertragung, so dass auch bei Anwendung eines Antikollisionsverfahrens zur Unterscheidung mehrerer gleichzeitig im Lesefeld befindlicher Detektierplättchen nur geringe Leseverzögerungen eintreten. Darüber hinaus besteht der Vorteil, wahlweise durch ausschließlichen Einsatz einer magnetischen Antenne die Lesereichweite extrem zu beschränken, bei Einsatz einer elektrischen, nur geringfügig verkürzten oder nicht verkürzten Antenne aber eine im Vergleich zu LF-Detektierplättchen oder HF-Detektierplättchen auf Karten sehr hohe Lesereichweite zu erzielen.

Die EP 200 0960 ist relevant nach Art. 54 (3) EPÜ und offenbart einen Rotationsdatenträger mit Detektierplättchen. Dieses besteht aus einem Chip mit magnetischer Koppelschleife.

Aus der DE 199 16 180 A1 ist ein RFID-Transponder bekannt, der auf einer Karte aus PVC eine Antennenschleife trägt, die mit einem Chip verbunden ist. Dabei umschließt die Antennenschleife einen nicht elektrisch leitfähigen Bereich der Karte.

Aus der DE 101 12 899 A1 ist ein ähnlicher RFID Transponder bekannt, bei der der Träger eine CD oder DVD ist.

Aus der JP 2005190043 ist ein kartenförmlicher Datenträger bekannt, der zwei Transponder beinhaltet. Ein erster Transponder für den HF-Bereich umfasst einen ersten Chip, dessen Anschlüsse mit einer ersten Antennenschleife verbunden sind, die am Rand der Karte verläuft. Ein zweiter Transponder für den UHF-Bereich umfasst einen zweiten Chip, dessen Anschlüsse mit einem mechanisch verkürzten Dipol in der Mitte der Karte verbunden sind. Der Dipol ist elektrisch verlängert durch einen Induktivitätsbelag in Form einer mäanderförmigen Struktur der Dipolelemente und durch einen Kapazitätsbelag in Form eines geradlinigen, parallel zu den Dipolelementen verlaufenden Leiters.

Aus der gattungsbildenden DE 201 10 585 U1 ist ein kartenförmlicher Datenträger bekannt, der zwei Transponder umfasst. Ein erster Transponder umfasst einen ersten Chip, dessen Anschlüsse mit einer ersten Antennenschleife verbunden sind, die am Rand der Karte verläuft. Ein zweiter Transponder umfasst einen zweiten Chip, dessen Anschlüsse mit einer zweiten Antennenschleife in der Mitte der Karte verbunden sind.

Der Erfindung liegt die Aufgabe zugrunde, bei funkgestützten Detektierplättchen im HF-Bereich zusätzlich ein Detektierplättchen im UHF-Bereich zu schaffen.

Diese Aufgabe wird bei einem Kartendatenträger mit einem Detektierplättchen nach dem Anspruch 1 gelöst.

Weiterbildungen und vorteilhafte Ausgestaltungen ergeben sich aus den Unteransprüchen.

Der Erfindung liegt die Überlegung zugrunde, dass durch ein Detektierplättchen aus einem Chip und einer magnetischen Antenne die magnetischen Komponenten des elektromagnetischen Wechselfeldes im Nahfeld überwiegen, daher die Ausbreitung des elektromagnetischen Wechselfeldes durch metallische Gegenstände im Nahfeld weniger beeinträchtigt wird, als bei Verwendung einer die elektrischen Komponenten bevorzugt abstrahlenden Antenne und dass als Schutz gegen Ausspähen von gespeicherten Daten des Kartendatenträgers die Lesereichweite begrenzt ist. Ein Einsatz derselben magnetischen Antenne als induktive Koppelschleife bietet aber auch die Möglichkeit, fest oder wahlweise mit einer Verstärkerantenne gekoppelt zu werden, um die Lesereichweite grundsätzlich oder wahlweise erheblich zu steigern.

Die Koppelschleife des Detektierplättchens ist mit einer Verstärkerantenne induktiv gekoppelt sein.

Über die Kopplung mit einer Verstärkerantenne, die eine rein passiv wirkende Komponente bildet, kann die Lesereichweite des Detektierplättchens wesentlich erhöht werden.

Die Verstärkerantenne ist als elektrische Antenne ausgebildet.

Durch eine elektrische Antenne kann über deren Design, insbesondere deren Länge und Form, in einfacher Weise eine exakte Anpassung der Resonanzfrequenz der Antenne an die Arbeitsfrequenz des Detektierplättchens und Lesegeräts vorgenommen werden, so dass die Antenne mit dem maximal möglichen Wirkungsgrad strahlen kann.

Die elektrische Antenne kann in oder auf dem Kartendatenträger selbst angeordnet sein.

Das Detektierplättchen auf dem Kartendatenträger erhält so eine erhöhte Lesereichweite und kann im Fernfeld mit einer magnetischen oder elektrischen Leseantenne gelesen werden.

Die Koppelschleife des Detektierplättchens bildet außerdem eine eigenständige magnetische Antenne, die im Nahfeld mit einer magnetischen Leseantenne gelesen werden kann.

Die elektrische Antenne kann Bestandteil einer Antenne eines Detektierplättchens für den HF-Bereich sein.

Dadurch lässt sich ohne Mehraufwand die Lesereichweite eines auf dem Kartenträger angeordneten Detektierplättchens für den UHF-Bereich erhöhen.

Die elektrische Antenne kann auch in oder auf einer Aufbewahrungshülle oder Halterung des Kartendatenträgers angeordnet sein.

Der Kartendatenträger mit dem Detektierplättchen für sich genommen hat dann nur eine geringe Lesereichweite. Durch Einschieben des Kartendatenträgers in die Aufbewahrungshülle oder Halterung wird die Koppelschleife auf dem Kartendatenträger mit der elektrische Antenne in oder auf der Aufbewahrungshülle oder Halterung gekoppelt und dadurch eine wesentlich erhöhte Lesereichweite erzielt. Gleichzeitig wird der Kartendatenträger dann definiert gehaltert und aufbewahrt und zusätzlich mechanisch geschützt. Durch die definierte Halterung wird auch eine stabile Leseverbindung mit einem Lesegerät gewährleistet, was dann vorteilhaft ist, wenn über die Anwesenheit des Kartendatenträgers Betriebsfunktionen eines Gerätes oder einer Maschine freigeschaltet werden sollen bzw. ein Fahrzeug identifiziert und eine Schranke geöffnet werden soll.

Nachfolgend wird die Erfindung anhand von Ausführungsbeispielen erläutert, die in der Zeichnung dargestellt sind. In der Zeichnung zeigen:
- Fig. 1: einen Kartendatenträger mit zwei Detektierplättchen, von denen eines für den UHF-Bereich bemessen, mittels einer Folie aufgeklebt und seine Koppelschleife mit einer vorhandenen HF-Antenne gekoppelt ist,
- Fig. 2: eine Aufbewahrungshülle mit einer elektrischen Antenne,
- Fig. 3: eine Aufbewahrungshülle mit einer elektrischen Antenne nach Fig. 1 und einem in die Aufbewahrungshülle eingeschobenen Kartendatenträger nach Fig. 1,
- Fig. 4: einen Kartendatenträger mit zwei Detektierplättchen, von denen eines für den UHF-Bereich bemessen, integral im Karten insert angeordnet und seine Koppelschleife mit einer vorhandenen HF-Antenne gekoppelt ist,
- Fig. 5: einen Interposer mit einem Chip und Anschlüssen für eine HF-Antenne und

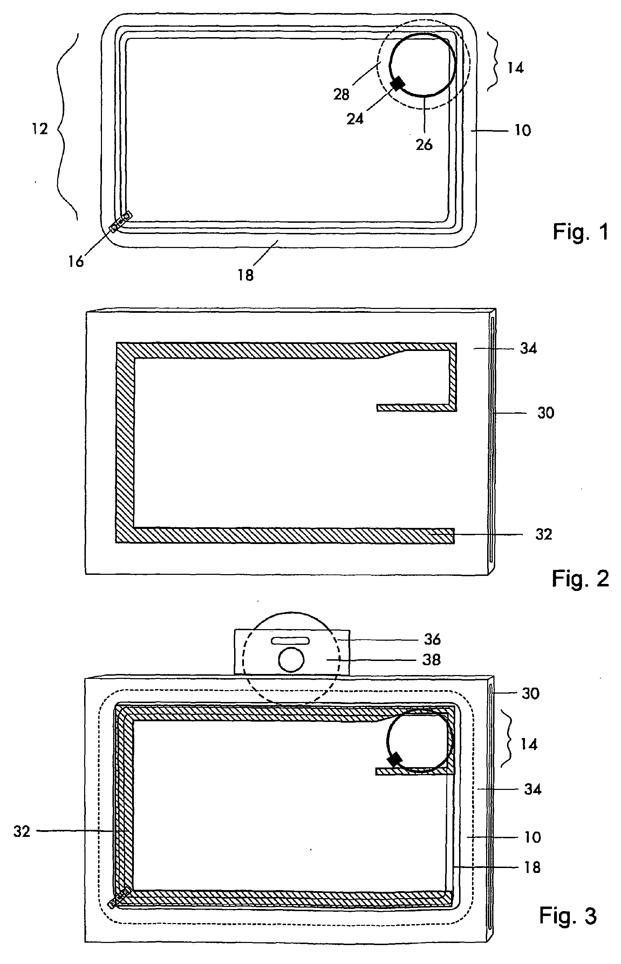

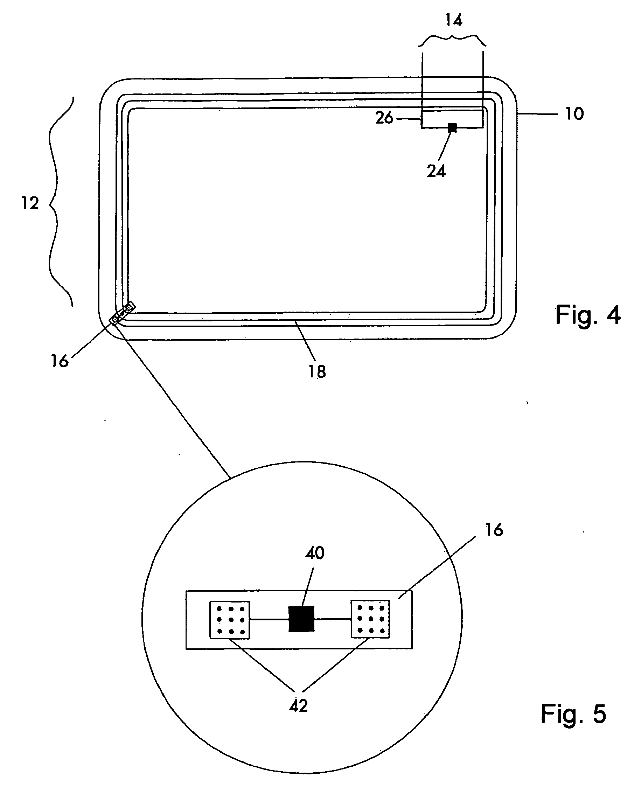

Fig. 1 zeigt einen Kartendatenträger 10 mit zwei Detektierplättchen 12, 14. Ein erstes Detektierplättchen 12 ist für den HF-Bereich bemessen und umfasst einen Interposer 16, auf dem ein Chip mit Antennenanschlüssen angeordnet ist. Eine Detaildarstellung ist in Fig. 5 gezeigt und erläutert. Die Antennenanschlüsse sind mit einer Antennenschleife 18 verbunden, die im Randbereich des Kartendatenträgers 10 angeordnet ist. Ein zweites Detektierplättchen 14 für den UHF-Bereich besteht aus einem Chip 24 und einer mit dem Chip 24 verbundenen Koppelschleife 26. Der Chip 24 mit der Koppelschleife 26 befindet sich auf einer Kunststofffolie 28, die nahe der einem Interposer 16 des ersten Detektierplättchens 12 gegenüberliegenden Ecke des Kartendatenträgers 10 auf diesen aufgeklebt ist. Dabei ist die Koppelschleife 26 mit der Antenne 18 des ersten Detektierplättchens 12 gekoppelt und nutzt diese als Verstärkerantenne. Um eine optimale Kopplung zu erzielen, wird das zweite Detektierplättchen 14 zweckmäßig mittels einer Schablone an einer zuvor ermittelten Stelle positioniert und dann angeklebt.

Die Koppelschleife 26 für sich bildet eine kleine magnetische Antenne für die magnetischen Komponenten eines elektromagnetischen Feldes und wird durch umgebende leitfähige Bestandteile nur unwesentlich in ihren Strahlungseigenschaften beeinflusst. Die Koppelschleife 26 kann daher im Nahfeld direkt mit einer magnetischen Leseantenne gekoppelt werden oder über den niederohmigen Koppelbereich der passiven Verstärkerantenne mit dieser Verstärkerantenne gekoppelt und im Fernfeld mit einer magnetischen oder elektrischen Leseantenne gelesen werden.

Fig. 2 zeigt eine Aufbewahrungshülle 30 mit einer elektrischen Antenne in Form eines asymmetrischen Strahlers 32 mit einem Koppelbereich 34 an einem Fußpunkt. Dieser Strahler 32 verläuft am Rande der Aufbewahrungshülle 30 und erstreckt sich über drei Kanten, wobei er jeweils an den Ecken abknickt.

Fig. 3 zeigt eine Aufbewahrungshülle 30 mit einer elektrischen Antenne 32 nach Fig. 2 als Verstärkerantenne und einem in die Aufbewahrungshülle 30 eingeschobenen Kartendatenträger 10 nach Fig. 1. In der eingeschobenen Position gelangt die Koppelschleife 26 in den Koppelbereich 34 der elektrischen Antenne 32 auf der Aufbewahrungshülle 30 und wird so mit der elektrischen Antenne gekoppelt. Die elektrische Antenne 32 auf der Aufbewahrungshülle verläuft parallel zur Antennenschleife 18 des ersten Detektierplättchens 12. Dadurch wird eine Verstimmung der elektrischen Antenne 32 auf der Aufbewahrungshülle 30 weitgehend vermieden, so dass etwa gleiche Anpassungsverhältnisse zwischen der Koppelschleife 26 und der elektrischen Antenne 34 auf der Aufbewahrungshülle 30 mit oder ohne vorhandene Antennenschleife 18 des ersten Detektierplättchens 12 erzielt werden können.

Die Aufbewahrungshülle 30 verfügt über einen Schlitz 36 zur Anbringung eines Trageclips und/oder einen Saugnapf 38 zur stationären Befestigung, insbesondere an der Scheibe eines Fahrzeugs.

Fig. 4 zeigt einen weiteren Kartendatenträger 10 mit zwei Detektierplättchen 12; 14, von denen eines für den UHF-Bereich bemessen, integral im Karteninsert angeordnet und seine Koppelschleife 26 mit einer vorhandenen HF-Antenne 18 gekoppelt ist. Bei der integralen Ausführung ist durch ein gemeinsames Layout mit der Antennenschleife 18 des ersten Detektierplättchens 12 eine optimale Kopplung zwischen der Koppelschleife 26 und der Antennenschleife 18 vorgegeben. Die Herstellung verursacht keine Mehrkosten, da zur Erzeugung der Leiterstruktur ohnehin das ursprünglich vorhandene Trägermaterial weggeätzt werden muss.

Fig. 5 zeigt einen Interposer 16 mit einem Chip 40 und Anschlüssen 42 für eine HF-Antenne. Der Interposer 16 wird vorzugsweise in einer Ecke des Kartendatenträgers 10 angeordnet und mit der Antennenschleife 18 kontaktiert, da dort die geringste Biegebeanspruchung des Kartendatenträgers 10 auftritt und somit der Chip 40 wie auch die Anschlüsse 42 gegen Biegebeanspruchungen und daraus eventuell resultierende Beschädigungen optimal geschützt sind.

Die erfindungsgemäße Ausgestaltung ermöglicht folgende Anwendungen.

Kartendatenträger mit Detektierplättchen bestehend aus einem Chip und einer mit dem Chip verbundenen Koppelschleife ohne Verstärkerantenne verfügen nur über eine kleine Lesereichweite und deren gespeicherte Daten können daher nicht durch Fernauslesen ausspioniert werden. Die Lesereichweite kann aber in Verbindung mit einer Aufbewahrungshülle und einer auf oder in der Aufbewahrungshülle angeordneten Verstärkerantenne erhöht werden.

Die Aufbewahrungshülle mit der Verstärkerantenne kann am Einsatzort, z. B. einer Person, einem Gerät, einer Maschine oder einem Fahrzeug verbleiben, um dort mittels des eingesteckten Kartendatenträgers im Fernfeld Betriebsfunktionen freizuschalten und den Kartendatenträger selbst zu haltern und aufzubewahren. Gleichzeitig dient die Aufbewahrungshülle auch als Positionierhilfe für die Kopplung der kartenseitigen Koppelschleife mit der hüllenseitgen Verstärkerantenne.

Durch die Auslesbarkeit im Fernfeld kann die Aufbewahrungshülle rein passiv gestaltet sein, während eine aktive Leseantenne abgesetzt und so gegen Manipulationen oder Beschädigung weitgehend unzugänglich angeordnet sein kann. Eine sichere Datenübertragung ist dennoch gewährleistet.

## Patentansprüche

1. Kartendatenträger (10) mit einem ersten HF-Detektierplättchen (12),
bestehend aus einem Interposer (16) mit einem ersten Chip (40) mit Antennenanschlüssen (42) und einer mit den Antennenanschlüssen (42) verbundenen Antennenschleife (18)
sowie einem zweiten Detektierplättchen (14) aus einem zweiten Chip (24) und einer mit dem Chip (24) gekoppelten Antennenanordnung, welche eine induktive Koppelschleife (26) umfasst, die mit Anschlüssen des zweiten Chips (24) verbunden ist,
wobei die Koppelschleife (26) einen nicht elektrisch leitfähigen Bereich des Kartendatenträgers (10) vollständig oder teilweise umschließt,
**dadurch gekennzeichnet,**
**dass** das zweite Detektierplättchen (14) ein UHF- Detektierplättchen ist,
**dass** die mit dem zweiten Chip (24) gekoppelte Antennenanordnung des zweiten Detektierplättchens (14)zusätzlich eine als elektrische Antenne ausgebildete, die Lesereichweite im Fernfeld erhöhende Verstärkerantenne (18, 32) umfasst und
**dass** die Koppelschleife (26) mit dieser Verstärkerantenne (18, 32) induktiv gekoppelt ist,
wobei die als elektrische Antenne ausgebildete Verstärkerantenne (18, 32)
a) einen Bestandteil der Antenne des ersten Detektierplättchens (12) für den HF-Bereich bildet, mit der sie in Wirkverbindung steht,
oder
b) in oder auf einer Aufbewahrungshülle (30) oder Halterung des Kartendatenträgers (10) angeordnet ist.

2. Kartendatenträger (10) mit Detektierplättchen (14) nach Anspruch 1, **dadurch gekennzeichnet, dass** die elektrische Antenne (18) in oder auf dem Kartendatenträger (10) selbst angeordnet ist.

3. Kartendatenträger (10) mit Detektierplättchen (14) nach Anspruch 2, **dadurch gekennzeichnet, dass** die elektrische Antenne (18) einen Bestandteil einer Antenne eines Detektierplättchens (12) für den HF-Bereich bildet, mit der sie in Wirkverbindung steht.

4. Kartendatenträger (10) mit Detektierplättchen (14) nach Anspruch 1, **dadurch gekennzeichnet, dass** die elektrische Antenne (32) in oder auf einer Aufbewahrungshülle (30) oder Halterung des Kartendatenträgers (10) angeordnet ist.

## Claims

1. A card data carrier (10) with a first HF detector pad (12),
consisting of an interposer (16) with a first chip (40) with antenna connections (42) and an antenna loop (18) linked to the antenna connections (42)
and also a second detector pad (14) made up of a second chip (24) and an antenna arrangement which is coupled to the chip (24) and which includes an inductive coupling loop (26), which is linked to connections of the second chip (24),
wherein the coupling loop (26) fully or partially encompasses an electrically nonconductive region of the card data carrier (10),
**characterised**
**in that** the second detector pad (14) is a UHF detector pad,
**in that** the antenna arrangement of the second detector pad (14), which is coupled to the second chip (24), additionally includes an amplifier antenna (18, 32) which is configured as an electric antenna and increases the reading range in the far zone and in that the coupling loop (26) is inductively coupled to this amplifier antenna (18, 32), wherein the amplifier antenna (18, 32) configured as an electrical antenna
(a) forms a component of the antenna of the first detector pad (12) for the HF range with which it is in operative connection,
or
(b) is arranged in or on a storage case (30) or holder of the card data carrier (10).

2. The card data carrier (10) with detector pad (14) according to Claim 1, **characterised in that** the electrical antenna (18) is arranged in or on the card data carrier (10) itself.

3. The card data carrier (10) with detector pad (14) according to Claim 2, **characterised in that** the electrical antenna (18) forms a component of an antenna of a detector pad (12) for the HF range with which it is in operative connection.

4. The card data carrier (10) with detector pad (14) according to Claim 1, **characterised in that** the electrical antenna (32) is arranged in or on a storage case (30) or holder of the card data carrier (10).

## Revendications

1. Support de données de carte (10) avec une première plaquette détectrice HF (12), qui est constituée par un interposeur (16) avec une première puce (40) munie de raccords d'antenne (42) et une boucle d'antenne (18) reliée aux raccords d'antenne (42), ainsi qu'avec une seconde plaquette détectrice (14), qui est constituée par une seconde puce (24) et un agencement d'antenne couplé à la puce (24) et qui comprend une boucle de couplage inductive (26) reliée à des raccords de la seconde puce (24), la boucle de couplage (26) enfermant entièrement ou partiellement une zone non conductrice électriquement du support de données de carte (10), **caractérisé en ce que** la seconde plaquette détectrice (14) est une plaquette détectrice UHF, que l'agencement d'antenne couplé à la seconde puce (24) de la seconde plaquette détectrice (14) comprend, en outre, une antenne amplificatrice (18, 32) qui augmente la portée de lecture dans le champs éloigné et est conçue comme antenne électrique, et **en ce que** la boucle de couplage (26) est couplée inductivement à cette antenne amplificatrice (18, 32), l'antenne amplificatrice (18, 32) conçue comme antenne électrique
a) formant une partie constitutive de l'antenne de la première plaquette détectrice (12) pour la gamme HF, antenne, à laquelle elle est reliée fonctionnellement,
ou
b) étant disposée dans ou sur une pochette de protection (30) ou sur un dispositif de maintien du support de données de carte (10).

2. Support de données de carte (10) avec une plaquette de détection (14) suivant la revendication 1, **caractérisé en ce que** l'antenne électrique (18) est disposée dans ou sur le support de données de carte (10) lui-même.

3. Support de données de carte (10) avec une plaquette de détection (14) suivant la revendication 2, **caractérisé en ce que** l'antenne électrique (18) forme une partie constitutive d'une antenne d'une plaquette de détection (12) pour la gamme HF, antenne, avec laquelle elle est en liaison active.

4. Support de données de carte (10) avec plaquette de détection (14) suivant la revendication 1, **caractérisé en ce que** l'antenne électrique (32) est disposée dans ou sur une pochette de protection (30) ou un dispositif de maintien du support de données de carte (10).
